# EUROPÄISCHE PATENTANMELDUNG

(11) **EP 1 514 788 A2**
(43) Veröffentlichungstag der Anmeldung: **16.03.2005**
(21) Anmeldenummer: 04021640.0
(22) Anmeldetag: 10.09.2004
(51) Int. Cl.: B62K 27/02

(54) **Fahrradanhänger**

(30) Priorität: 11.09.2003 DE 10342225
(71) Anmelder: Inter-Union Technohandel GmbH, 76829 Landau (DE)
(72) Erfinder: Sandner, Gerhard, 67454 Hassloch (DE)
(74) Vertreter: Bittner, Thomas L., Dr.

(57) **Zusammenfassung**

Die Erfindung betrifft einen Fahrradanhänger (1) zum Transportieren von Lasten/oder Kindern. Der Fahrradanhänger (1) ist als ein Seitenwagen neben einem ziehenden Fahrrad befestigbar.

## Beschreibung

Die Erfindung betrifft einen Fahrradanhänger zum Transportieren von Lasten und/oder Kindern.

Fahrräder stellen ein beliebtes Verkehrsmittel dar, um insbesondere kürzere Strecken zurückzulegen. Hierbei werden Fahrräder sowohl als Transportmittel beispielsweise für eingekaufte Waren des täglichen Lebens als auch als Freizeitmittel zum Ausführen von Ausflügen genutzt. Bei beiden Verwendungen ist es häufig wünschenswert, auch schwerere oder sperrige Lasten, beispielsweise Getränkekästen oder Gepäck, bzw. Kleinkinder mitzuführen. Um den Lasten- bzw. Kindertransport mit einem Fahrrad ausführen zu können, sind Fahrradanhänger entwickelt worden, die ein oder mehrere Laufräder aufweisen, die an einem Anhängerahmen befestigt sind, welcher mit einer Deichsel mit dem Fahrrad verbunden ist. Die Deichsel ist in der Regel entweder im Bereich der Hinterradachse des Fahrrads oder im Bereich der Sattelstütze des Fahrrads befestigt. Im Betrieb wird der Fahrradanhänger hinter dem Fahrrad hergezogen.

Die bekannten Fahrradanhänger weisen jedoch einige Nachteile auf. Zum einen ist die Kommunikation während des Fahrens zwischen dem Erwachsenen, der das Fahrrad lenkt, und den Kindern schwierig, die in dem Anhänger gezogen werden. Außerdem wird bei feuchter Fahrbahn das von dem Hinterrad des Fahrrads aufgewirbelte Spritzwasser auf den Fahrradanhänger geschleudert, was zu einer unerwünschten Verunreinigung des Anhängers und/oder der darin befindlichen Kinder oder Lasten führt.

Große, stark befahrene Straßen weisen an Kreuzungen und Übergangen häufig Verkehrsinseln auf, auf denen Fußgänger und Fahrradfahrer rote Ampelphasen oder ein Passieren anderer Verkehrsteilnehmer abwarten müssen. Diese Verkehrsinseln sind jedoch häufig so klein, daß ein Gespann aus einem Fahrrad und einem dahinter gezogenen Anhänger zu lang ist, um auf der Verkehrsinsel Platz zu finden. So ragt von diesen Inseln entweder das Fahrrad oder der Anhänger in eine der an der Verkehrsinsel vorbeiführenden Fahrbahnen beim Warten hinein, welches eine erhöhte Gefährdung des Fahrradfahrers und der im Anhänger sitzenden Kinder bedeutet.

Aufgabe der Erfindung ist es daher, einen verbesserten Fahrradanhänger der eingangs genannten Art zu schaffen, der die oben genannten Nachteile nicht aufweist.

Die Aufgabe wird erfindungsgemäß durch einen Fahrradanhänger zum Transportieren von Lasten und/oder Kindern gelöst, der als ein Seitenwagen neben einem ziehenden Fahrrad befestigbar ist. Der erfindungsgemäße Fahrradanhänger bietet den Vorteil, daß die Gesamtkombination Fahrrad plus Fahrradanhänger eine Länge aufweist, die im wesentlichen der Länge des Fahrrads entspricht. Ferner wird insbesondere die Kommunikation mit den im Fahrradanhänger transportierten Kindern deutlich erleichtert. Der das Fahrrad fahrende Erwachsene muß sich nicht so häufig umschauen und kann sich somit besser auf den Straßenverkehr konzentrieren. Ein kurzer Seitenblick reicht aus, um den Fahrradanhänger zu überblicken. Dieses ist auch beim Passieren von Hindernissen von Vorteil, da der Fahrer die Abmessungen der Kombination Fahrrad plus Anhänger besser abschätzen kann als bei gezogenen Fahrradanhängem. Kollisionsrisiken aufgrund einer falschen Einschätzung des Einschwenkverhaltens des Fahrradanhängers, wie sie bei den hinter dem Fahrrad gezogenen Fahrradanhängern häufig auftreten, werden ausgeschlossen. Ferner haben die im Fahrradanhänger transportierten Kinder eine freie Sicht nach vorne, die ihnen bei den Anhängern nach dem Stand der Technik durch das ziehende Fahrrad versperrt wird. Wird der Fahrradanhänger auf der rechten Seite des Fahrrads montiert, so sind die Kinder in dem Fahrradanhänger bei einem vorherrschenden Rechtsfahrgebot ferner durch das Fahrrad gegenüber überholenden Verkehrsteilnehmern beim Fahren auf einer Straße abgeschirmt. Hierdurch sind sie einer geringeren Belastung durch Schmutz, Abgase und aufgewirbeltes Wasser ausgesetzt.

Bei einer vorteilhaften Weiterbildung der Erfindung umfaßt der Fahrradanhänger Befestigungsmittel, die in einem vorderen Bereich eines Rahmens des Fahrrads lösbar befestigt sind. Durch eine Befestigung des Fahrradanhängers im vorderen Bereich des Rahmens, vorzugsweise an dem Steuerrohr des Rahmens, wird erreicht, daß die beim Fahren auftretenden Kräfte optimal auf den Anhänger übertragen werden und ein seitlicher Abstand zwischen dem Fahrrad und dem Anhänger insbesondere beim Ausführen von Lenkbewegungen konstant bleibt.

Eine Weiterbildung der Erfindung umfaßt hintere Befestigungsmittel, die in einem Bereich einer Hinterradachse des Fahrrads befestigbar sind. Im Bereich der Hinterradachse ist der Rahmen des Fahrrads stabil genug ausgeführt, um auch die durch den Anhänger übertragenen Kräfte sicher aufnehmen zu können. So kann beispielsweise ein Laufrad auf der dem Fahrrad zugewandten Seite eingespart werden.

Eine besonders vorteilhafte Verbindung der hinteren Befestigungsmittel mit dem Fahrrad sieht vor, daß die hinteren Befestigungsmittel auf der Hinterradachse des Fahrrads anschraubbar sind.

Um den Fahrradanhänger möglichst flexibel mit unterschiedlichen Fahrrädern verwenden zu können, sieht eine vorteilhafte Ausführungsform der Erfindung vor, daß Abstände der vorderen Befestigungsmittel von den hinteren Befestigungsmitteln gemessen entlang einer Fahrtrichtung des Fahrrads als auch senkrecht zu einer Fahrebene veränderlich sind, um an unterschiedliche Rahmengrößen des ziehenden Fahrrads anpaßbar zu sein.

Eine vorteilhafte Weiterbildung der Erfindung sieht vor, daß die Befestigungsmittel über ineinander verschiebbare Rohre mit Löchern miteinander verbunden sind, um die Abstände anpassen zu können, wobei die ineinander verschiebbaren Rohre mit Hilfe von Schnappverriegelungen oder Stiften, die in die Löcher eingreifen, zueinander arretierbar sind. Diese Weiterbildung der Erfindung ermöglicht es, die Anpassung des Fahrradanhängers an verschiedene Rahmengrößen des ziehenden Fahrrads ohne eine Verwendung von Werkzeug auszuführen. Verbindungen aus ineinander verschiebbaren Rohren sind ferner besonders gegenüber Knick- und Biegekräften stabil, die auf die Verbindung einwirken.

Ferner weist eine vorteilhafte Fortbildung der Erfindung Aufnahmemittel zum Aufnehmen mindestens einer Laufradachse mindestens eines Laufrads auf, wobei ein Abstand der mindestens einen Laufradachse, gemessen senkrecht zu der Fahrebene, bezüglich der hinteren Befestigungsmittel veränderbar ist, um an unterschiedliche Fahrradgrößen anpaßbar zu sein. Diese Fortbildung steigert die Anpaßbarkeit des Anhängers an unterschiedliche Fahrradgrößen, so daß gewährleistet ist, daß eine Transport- oder Sitzebene unabhängig von der Reifengröße des Fahrrads eine gleichbleibende Orientierung zur Fahrebene behält und nicht seitlich in Abhängigkeit von der Reifen- oder Rahmengröße des ziehenden Fahrrads seitlich zur Fahrtrichtung geneigt ist.

Eine besonders vorteilhafte Weiterbildung der Erfindung sieht vor, daß die Befestigungsmittel lösbar mit Hilfe mechanischer Verbindungsmittel mit einem Rest des Fahrradanhängers verbunden sind. Bei dieser Weiterbildung können die Befestigungsmittel fest mit dem Fahrrad verbunden bleiben und der Rest des Fahrradanhängers leicht von dem Fahrrad getrennt werden. Dies ermöglicht einen flexiblen Einsatz des Fahrrads sowohl mit dem Anhänger als auch ohne den Anhänger, falls keine Lasten bzw. Kinder zu transportieren sind.

Bei einer anderen vorteilhaften Weiterbildung der Erfindung halten die vorderen Befestigungsmittel und die hinteren Befestigungsmittel ein zumindest größtenteils ungefähr parallel zur Fahrebene und der Fahrtrichtung verlaufendes Tragerohr, auf das ein Anhängerrahmen mit Hilfe von Haken lösbar befestigbar ist, wobei die Haken an dem Tragerohr mit mechanischen Verriegelungsmitteln gesichert sind. Bei dieser Ausführungsform ist der Fahrradanhängerrahmen zusammen mit den darauf befestigten Aufbauten leicht von dem Fahrrad zu trennen, wenn der Anhänger nicht mitgeführt werden soll. Ferner ist es vorteilhaft, daß eine leichte Kippbewegung des Fahrrads um eine durch das Tragerohr festgelegte Achse möglich ist, um Unebenheiten in der Fahrbahn auszugleichen und ein Kurvenverhalten der Kombination Fahrrad plus Fahrradanhänger zu verbessern.

Die Erfindung wird im folgenden anhand eines Ausführungsbeispiels unter Bezugnahme auf eine Zeichnung näher erläutert. Hierbei zeigen:
- Figur 1: eine schematische Ansicht einer Grundkonstruktion eines als Seitenwagen ausgebildeten Fahrradanhängers seitlich von hinten;
- Figur 2: einen Ausschnitt des Seitenwagens nach Figur 1 von vorne;
- Figur 3: eine Detailansicht der vorderen Befestigungsmittel des Seitenwagens nach Figur 1;
- Figur 4: eine schematische Zeichnung des Seitenwagens nach Figur 1;
- Figur 5: eine schematische Zeichnung des Anhängerrahmens getrennt von dem Tragerohr des Seitenwagens nach den Figur 1;
- Figur 6: eine schematische Zeichnung der hinteren Befestigungsmittel;
- Figur 7: eine schematische Zeichnung des Abstandsrohrs der hinteren Befestigungsmittel;
- Figur 8: eine schematische Zeichnung der vorderen Befestigungsmittel;
- Figur 9: eine schematische Zeichnung des vorderen Abstandsrohrs; und
- Figur 10: eine schematische Zeichnung des Tragerohrs.

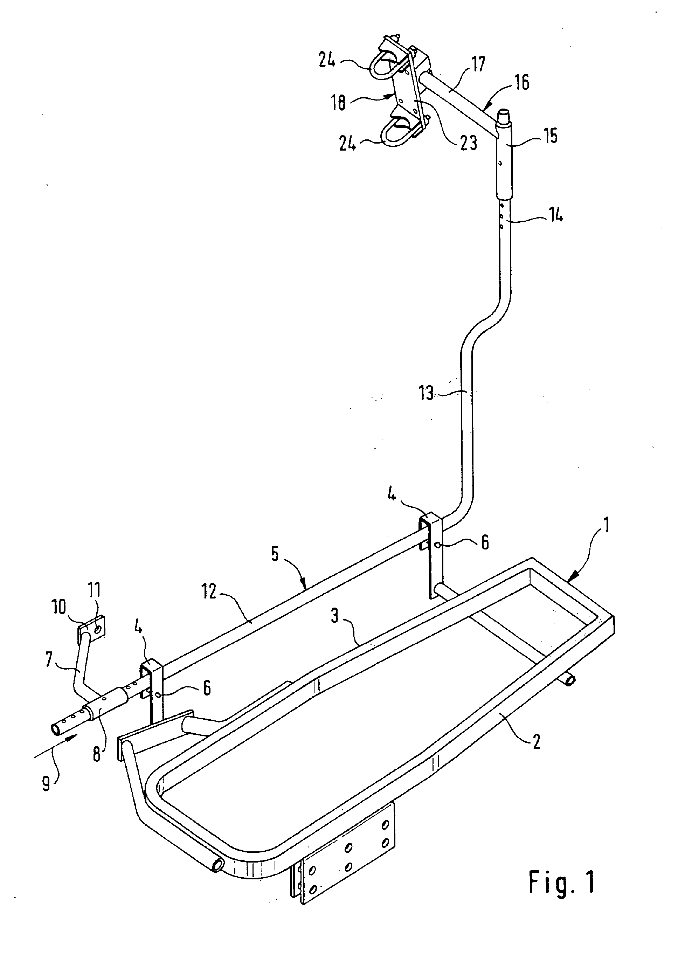

Figur 1 zeigt eine schematische Ansicht einer Grundkonstruktion eines als Seitenwagen ausgebildeten Fahrradanhängers 1, der für eine Befestigung neben einem ziehenden Fahrrad vorgesehen ist. Auf der Grundkonstruktion wird ein Aufsatz (nicht dargestellt) montiert, so daß Gegenstände und/oder Personen transportiert werden können. Des weiteren ist in Figur 1 ein Laufrad des Anhängers nicht dargestellt, welches den Anhänger auf einer von dem ziehenden Fahrrad abgewandten Seite stützt.

Der Fahrradanhänger 1 umfaßt einen Anhängerrahmen 2, der als Rohrkonstruktion ausgeführt ist. An dem Anhängerrahmen 2 werden Aufbauten, z. B. Sitze und Gurte zum Transportieren von Kindern, eine Grundplatte und Seitenwände zum Transportieren von Lasten usw. befestigt. An dem Anhängerrahmen 2 kann eine Metall- oder Kunststoffwanne befestigt werden. Alternativ kann der Anhängerrahmen auch selbst als Metall- oder Kunststoffwanne ausgebildet sein. An einer Seite 3, an der der Fahrradanhänger mit dem Fahrrad verbunden wird, weist der Anhängerrahmen 2 Haken 4 auf, die um ein Tragerohr 5 greifen und mit Hilfe von mechanischen Verriegelungsmitteln 6 an dem Tragerohr 5 gesichert sind. Die mechanischen Verriegelungsmittel 6 können Sicherungsstifte, Schrauben oder ähnliches umfassen.

Ein Abstandsrohr 7 umfaßt einen Rohrabschnitt 8, der auf dem Tragerohr 5 verschiebbar ist. Sowohl der Rohrabschnitt 8 als auch das Tragerohr 5 weisen voneinander beabstandete Löcher auf, durch die ein Splint, eine Schraube oder etwas ähnliches geführt werden kann, um das Abstandsrohr 7 relativ zu einer Verschieberichtung 9 zu arretieren. Alternativ kann die Arretierung auch mit Hilfe eines Schnappverschlusses erfolgen, der einen mit einer Feder vorgespannten Stift umfaßt, der beim Verschieben des Rohrabschnitts 8 auf dem Tragerohr 5 in das Tragerohr 5 eingedrückt ist, und zum Arretieren in eines der Löcher des Rohrabschnitts 8 eingreift. Diese Art der Schnappverschlüsse ist beispielsweise aus dem Campingbereich zum Verbinden von Rohrgestängen von Zelten bekannt. Mit dem Abstandsrohr 7 sind hintere Befestigungsmittel 10 verbunden, die eine Bohrung 11 aufweisen. Mit Hilfe der Bohrung 11 können die hinteren Befestigungsmittel auf einer Hinterradachse eins ziehenden Fahrrads festgeschraubt werden. Das Tragerohr 5, dessen größter Abschnitt 12 parallel sowohl zur Fahrebene als auch zu einer Fahrtrichtung des Fahrrads bei Geradeausfahrt verläuft, weist einen weiteren Abschnitt 13 auf, der im wesentlichen senkrecht zu der Fahrebene ausgerichtet ist. Über einem oberen Ende 14 des Tragerohrs 5 ist ein Rohrabschnitt 15 eines Abstandhalters 16 verschiebbar angeordnet. Der Rohrabschnitt 15 des Abstandhalters 16 ist relativ zu dem Tragerohr 5 mit Hilfe eines Stifts, eines Schnappverschlusses oder etwas ähnlichen arretierbar. An einem Rohrabschnitt 17 des Abstandhalters 16 sind vordere Befestigungsmittel 18 angeordnet. Die vorderen Befestigungsmittel 18 werden im Betrieb am Rahmen, vorzugsweise dem Steuerrohr, des Fahrrads befestigt, das den als Seitenwagen ausgebildeten Fahrradanhänger 1 zieht.

Der größte Abschnitt 12 des Tragerohrs 5 erstreckt sich bei Gradeausfahrt des Fahrrads parallel zur Fahrtrichtung 9 und zur Fahrebene. Der weitere Abschnitt 13 erstreckt sich hingegen im wesentlichen senkrecht zur Fahrebene. Ein Abstand der mit dem Abstandsrohr 7 verbundenen hinteren Befestigungsmittel 10 von den mit dem Abstandshalter 16 verbundenen vorderen Befestigungsmittel 18 gemessen parallel zur Fahrebene und Fahrtrichtung kann aufgrund der Verschiebbarkeit des Abschnitts 8 des Abstandsrohrs 7 auf dem Tragerohr 5 angepaßt werden. In gleicher Wiese kann der Abstand der Befestigungsmittel 10, 18 gemessen senkrecht zur Fahrebene aufgrund der Verschiebbarkeit des Rohrabschnitts 15 des Abstandhalters 16 auf dem oberen Ende 14 des Tragerohrs 5 angepaßt werden.

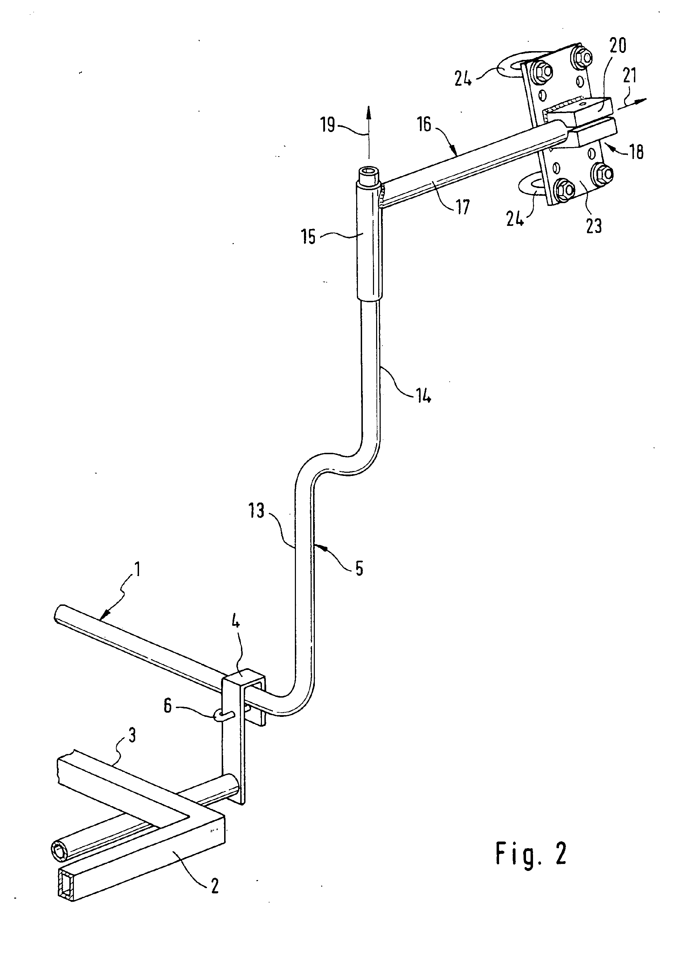

Figur 2 zeigt einen Ausschnitt der Grundkonstruktion des Seitenwagens nach Figur 1 von vorne. Identische Teile sind in den verschiedenen Figuren mit identischen Bezugszeichen versehen. Dargestellt ist ein Teil des Tragerohrs 5 des Fahrradanhängers 1, auf dem ein Haken 4 des Anhängerrahmens 2 gehängt ist. Der Abstandshalter 16 ist entlang einer Richtung 19, die senkrecht zur Fahrbahnebene orientiert ist mit Hilfe des Rohrabschnitts 15 auf dem oberen Ende 14 des Tragerohrs 5 verschiebbar und mittels mechanischer Verriegelungsmittel, beispielsweise eines Stifts, eines Schnappverschlusses oder ähnlichen arretierbar. Die vorderen Befestigungsmittel 18 weisen einen schellenartigen Block 20 auf, der um den Rohrabschnitt 17 des Abstandhalters 16 greift. Hierdurch sind die vorderen Befestigungsmittel 18 entlang einer Richtung 21 auf dem Rohrabschnitt 17 des Abstandhalters 16 verschiebbar und ebenso um die Achse des Rohrabschnitts 17 drehbar. Somit können die vorderen Befestigungsmittel 18 an eine Neigung des Steuerrohrs des Fahrradrahmens angepaßt werden, in dem die Gabel des Vorderrads geführt wird. Mit Hilfe einer Verschiebung entlang der Richtung 21 kann ein Abstand des Fahrradanhängers 1 von dem Fahrrad angepaßt werden.

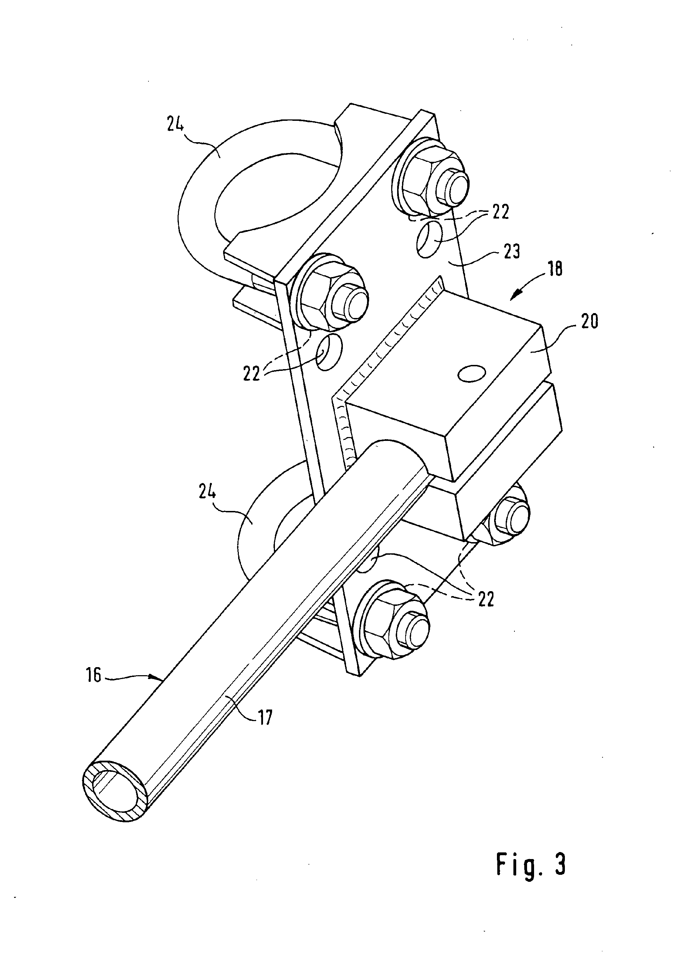

Figur 3 zeigt eine Detailansicht der vorderen Befestigungsmittel 18, die ebenfalls in der schematischen Zeichnung der Figur 8 dargestellt sind. An dem schellenartigen Block 20, der auf dem Rohrabschnitt 17 des Abstandhalters 16 befestigt ist, ist eine mit Löchern 22 versehene Platte 23 angeschweißt. Mit Hilfe von u-förmigen Schrauben 24 können die Befestigungsmittel am Rahmen, beispielsweise dem Steuerrohr, des Fahrrads festgeklemmt werden.

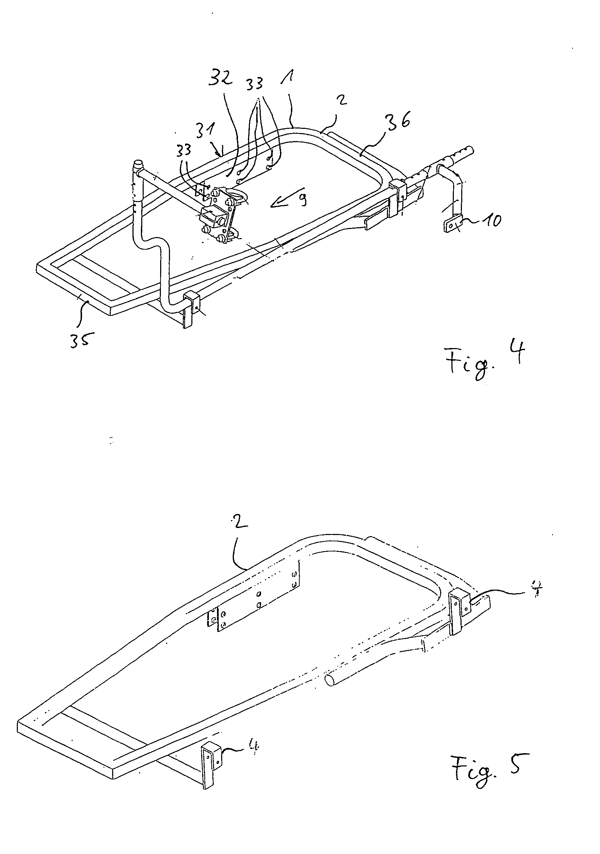

Figur 4 ist eine schematische Zeichnung des Seitenwagens nach Figur 1. An einer Seite 31, die von dem Fahrrad abgewandt ist, sind mit dem Anhängerrahmen 2 Aufnahmemittel 32 verbunden. Die Aufnahmemittel 32 weisen Löcher 33 zum Aufnehmen einer Laufradachse eines Laufrads (beide nicht dargestellt) auf. Die Löcher 33 weisen unterschiedliche Abstände von den hinteren Befestigungsmitteln 10 sowohl gemessen entlang der Fahrrichtung 10 als auch gemessen entlang einer durch einen Pfeil 34 angedeuteten Richtung senkrecht zur Fahrebene auf. Hierdurch ist es möglich, die Laufradachse mit dem Anhängerrahmen 2 so zu verbinden, daß ein vorderes und ein hinteres Querrohr 35, 36 des Anhängerrahmens 2 im wesentlichen parallel zur Fahrebene, unabhängig von der Rahmengröße und einem Raddurchmesser des ziehenden Fahrrads ausgerichtet sind.

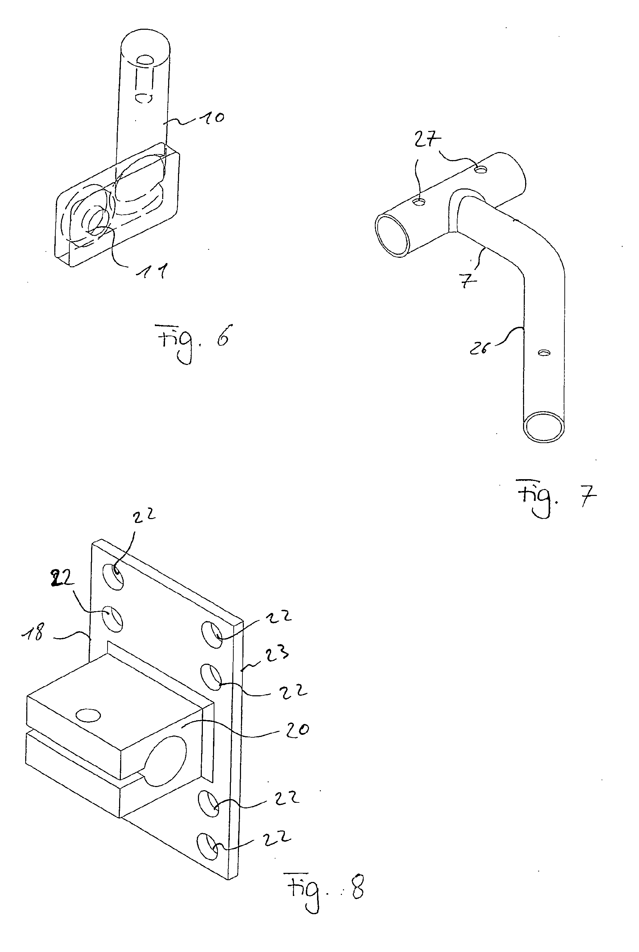

In Figur 5 ist eine schematische Zeichnung des Anhängerrahmens 2. Deutlich zu erkennen sind die Haken 4, mit denen der Anhängerrahmen 2 an dem Tragerohr 5 (vgl. Figur 1) befestigt wird. Figur 6 ist eine Teilansicht der hinteren Befestigungsmittel 10, die die Bohrung 11 umfassen, durch welche die Hinterradachse des Fahrrads geführt wird, um den Fahrradanhänger im Bereich der Hinterradachse des Fahrrads zu befestigen. Ein Rohrstutzen 25 ist in einen Aufnahmeabschnitt 26 des Abstandsrohrs 7 (vgl. Figur 7) einführbar. Eine schematische Zeichnung des Abstandsrohrs 7 ist in Figur 7 dargestellt. Der Rohrabschnitt 8 des Abstandsrohrs 7 weist Löcher 27 auf, durch die die mechanischen Verriegelungsmittel geführt werden, die das Abstandsrohr auf dem Tragerohr 5 (vgl. Figur 1) arretieren. Figur 8 ist eine schematische Zeichnung der vorderen Befestigungsmittel 18. Figur 9 ist eine schematische Zeichnung des Abstandhalters 16, an dessen Rohrabschnitt 17 die vorderen Befestigungsmittel 18 befestigt werden. Der Rohrabschnitt 15 wird auf dem oberen Ende 14 des Tragerohrs 5 befestigt (vgl. Figur 1).

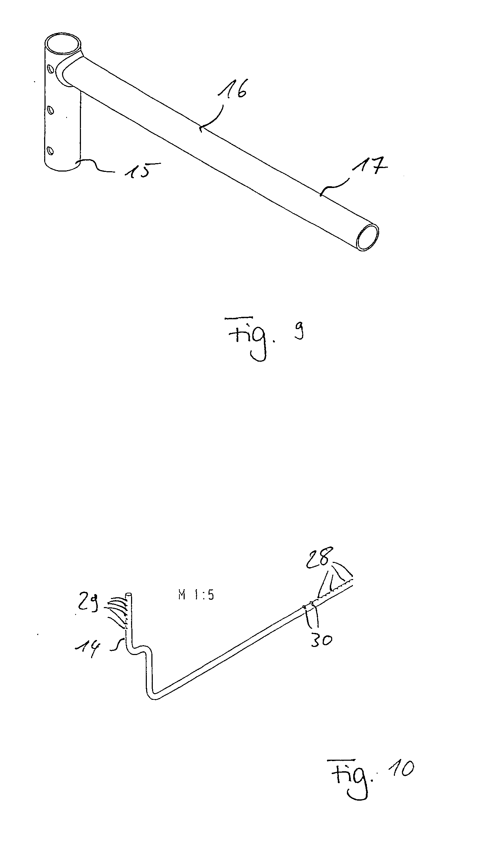

Figur 10 ist eine schematische Zeichnung des Tragerohrs 5. Deutlich zu erkennen sind mehreren Löcher 28, mit Hilfe derer das Abstandsrohr und somit die hinteren Befestigungsmittel in verschiedenen Positionen an dem Tragerohr befestigt werden können. Weitere Löcher 29 am oberen Ende 14 des Tragerohrs 5 dienen zur Höhenanpassung des Abstandhalters 16 nach Figur 9 und somit der vorderen Befestigungsmittel. Zwei Vorsprünge 30 an dem Tragerohr 5 sind vorgesehen, um einen der Haken 4 (vgl. Figur 1) des Anhängerrahmens 2 an einer Verlagerung entlang der Richtung 9 in dem Zustand zu hindern, in dem der Anhängerrahmen 2 mit Hilfe der Haken 4 an dem Tragerohr 5 befestigt ist (siehe Figur 1).

Die in der vorstehenden Beschreibung und den Zeichnungen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Fahrradanhänger (1) zum Transportieren /- von Lasten und/oder Kindern, **dadurch gekennzeichnet**, das der Fahrradanhänger (1) als ein Seitenwagen neben einem ziehenden Fahrrad befestigbar ist.

2. Fahrradanhänger (1) nach Anspruch 1, **gekennzeichnet durch** Befestigungsmittel (18), die in einem vorderen Bereich eines Rahmens des Fahrrads lösbar befestigt sind.

3. Fahrradanhänger (1) nach Anspruch 1 oder 2, **gekennzeichnet durch** hintere Befestigungsmittel, die in einem Bereich einer Hinterradachse des Fahrrads befestigbar sind.

4. Fahrradanhänger (1) nach Anspruch 3, **dadurch gekennzeichnet, daß** die hinteren Befestigungsmittel (10) auf der Hinterradachse des Fahrrads anschraubbar sind.

5. Fahrradanhänger (1) nach Anspruch 4, **dadurch gekennzeichnet, daß** Abstände der vorderen Befestigungsmittel (18) von den hinteren Befestigungsmitteln (10) gemessen entlang einer Fahrtrichtung des Fahrrads als auch senkrecht zu einer Fahrebene veränderlich sind, um an unterschiedliche Rahmengrößen des ziehenden Fahrrads anpaßbar zu sein.

6. Fahrradanhänger (1) nach Anspruch 5, **dadurch gekennzeichnet, daß** die Befestigungsmittel (10, 18) über ineinander verschiebbare Rohre (5, 8, 15) mit Löchern (27, 28, 29) miteinander verbunden sind, um die Abstände anpassen zu können, wobei die ineinander verschiebbaren Rohre (5, 8, 15) mit Hilfe von Schnappverriegelungen oder Stiften, die in die Löcher (27, 28, 29) eingreifen, zueinander arretierbar sind.

7. Fahrradanhänger (1) nach einem der Ansprüche 3 bis 6, **gekennzeichnet durch** Aufnahmemittel (32) zum Aufnehmen mindestens einer Laufradachse mindestens eines Laufrads, wobei ein Abstand der mindestens einen Laufradachse, gemessen senkrecht zu der Fahrebene, bezüglich der hinteren Befestigungsmittel (10) veränderbar ist, um an unterschiedliche Fahrradgrößen anpaßbar zu sein.

8. Fahrradanhänger (1) nach einem der Ansprüche 2 bis 7, **dadurch gekennzeichnet, daß** die Befestigungsmittel (10, 18) lösbar mit Hilfe mechanischer Verbindungsmittel mit einem Rest des Fahrradanhängers (1) verbunden sind.

9. Fahrradanhänger (1) nach Anspruch 8, **dadurch gekennzeichnet, daß** die vorderen Befestigungsmittel (18) und die hinteren Befestigungsmittel (10) ein zumindest größtenteils ungefähr parallel zur Fahrebene und der Fahrtrichtung verlaufendes Tragerohr (5) halten, auf das ein Anhängerrahmen (2) mit Hilfe von Haken (4) lösbar befestigbar ist, wobei die Haken (4) an dem Tragerohr (5) mit mechanischen Verriegelungsmitteln (6) gesichert sind.
